# EUROPEAN PATENT APPLICATION

(11) **EP 4 730 444 A1**
(43) Date of publication of application: **22.04.2026**
(21) Application number: 25208181.5
(22) Date of filing: 13.10.2025
(51) Int. Cl.: H01M 4/66, H01M 10/42, H01M 50/107, H01M 50/533, H01M 50/534, H01M 50/538, H01M 50/586, H01M 50/59, H01M 4/04, H01M 10/04

(54) **SECONDARY BATTERY, BATTERY PACK, AND ELECTRONIC DEVICE**

(30) Priority: 17.10.2024 CN 202422517329 U
(71) Applicant: AESC Japan Ltd., Yokohama-shi, Kanagawa 220-0012 (JP)
(72) Inventor: ZHANG, Wenjing, Jiangyin City, Wuxi City, 214443 (CN)
(74) Representative: Becker, Eberhard

(57) **Abstract**

A secondary battery (100), a battery pack (1002), and an electronic device (1000) are provided. The secondary battery (100) includes: an electrode assembly (120), in which a first electrode (20) includes a first current collector (28) and a first active material layer (26), the uncoated area (28b) includes a first uncoated area (28b1), a second uncoated area (28b2), and a third uncoated area (28b3) in sequence, the second uncoated area (28b2) includes a first tab (28b21) and a connection area (28b22) connected between the first tab (28b21) and the coated area (28a), and the first uncoated area (28b1) and the third uncoated area (28b3) do not include the first tab (28b21); and an insulation layer (40) including a first insulation area (401) covering the first uncoated area (28b1), a second insulation area (402) covering the connection area (28b22), and a third insulation area (403) covering the third uncoated area (28b3).

## Description

### BACKGROUND

### Technical Field

The disclosure relates to a secondary battery, a battery pack, and an electronic device.

### Description of Related Art

In a field of a new energy power battery, a secondary battery is increasingly being used in a wide range of applications. For example, the secondary battery (e.g., a lithium-ion battery) may be applied to an electronic device such as a vehicle, an energy storage, a mobile phone, a tablet computer, a wearable device, a power bank, a digital product, a power tool, a power device, and an energy storage device. One type of the secondary battery is a cylindrical battery, which includes a housing and an electrode assembly. The electrode assembly includes a positive electrode, a first separator, a negative electrode, and a second separator, which are stacked in sequence and wound to form the electrode assembly, and then packaged in the housing. However, the existing secondary battery still requires further improvement in some aspects.

### SUMMARY

In view of issues existing in the related art, an objective of the disclosure is to provide a secondary battery, a battery pack, and an electronic device, so as to at least improve safety of a battery.

According to one aspect of an embodiment of the disclosure, a secondary battery is provided. The secondary battery includes an electrode assembly, in which the electrode assembly includes a first electrode, a second electrode, and a separator disposed between the first electrode and the second electrode, the first electrode includes a first current collector and a first active material layer, along a height direction of the electrode assembly, the first current collector includes a coated area covered by the first active material layer and an uncoated area not covered by the first active material layer, along a winding direction of the first electrode, the uncoated area includes a first uncoated area, a second uncoated area, and a third uncoated area in sequence, along an opposite direction of the height direction, the second uncoated area includes a first tab and a connection area connected between the first tab and the coated area, and the first uncoated area and the third uncoated area do not include the first tab; and an insulation layer including a first insulation area covering the first uncoated area, a second insulation area covering the connection area, and a third insulation area covering the third uncoated area, in which a first width of the third insulation area in the height direction is less than a second width of the second insulation area in the height direction.

In some embodiments, the second width ranges from 1.3 mm to 2.7 mm.

In some embodiments, the first insulation area has a third width in the height direction, and the third width is less than the second width.

In some embodiments, the first width ranges from 1.3 mm to 3.2 mm, and the first width is consistent with the third width.

In some embodiments, the separator has a first end in the height direction, the third insulation area has a first end in the height direction, and the first end of the separator extends beyond the first end of the third insulation area in the height direction by a distance in a range of 0.5 mm to 2 mm.

In some embodiments, each of the first tabs includes a first edge and a second edge opposite to each other in the winding direction, the first edge and the second edge are connected to the connection area, and the first electrode extends from a winding start end to a winding terminal end in the winding direction. The first edge and the second edge are inclined toward the winding terminal end.

In some embodiments, the first electrode is a positive electrode, and the secondary battery is a cylindrical battery.

In some embodiments, the secondary battery further includes a housing configured to accommodate the electrode assembly, in which the housing includes a peripheral side wall and an end wall connected to one end of the peripheral side wall, and the other end of the peripheral side wall has an opening, in which the first tab faces the end wall; an electrode post passing through the end wall and electrically insulated from the end wall; and a first current collecting plate connected between the first tab and the electrode post, in which the secondary battery is a cylindrical battery.

An embodiment of the disclosure further provides a battery pack, and the battery pack includes any one of the above secondary batteries.

An embodiment of the disclosure further provides an electronic device, and the electronic device includes the above battery pack.

Beneficial technical effects of the disclosure are:
In the above technical solutions of the disclosure, the safety may be ensured by disposing the first uncoated area and the third uncoated area without the tabs on two sides of the second uncoated area in the winding direction. Furthermore, the insulation layer with the greater second width is disposed on the second uncoated area protruding with the tab, which may provide support for the second uncoated area protruding with the tab when the tab is bent, prevent a risk of the tab being inserted inwardly, and eliminate burrs at bending corners, further improving the safety.

### BRIEF DESCRIPTION OF THE DRAWINGS

In order to more clearly describe the embodiments of the disclosure or the technical solutions in the related art, the accompanying drawings required for use in descriptions of the embodiments or the related art will be briefly introduced below. Obviously, the accompanying drawings in the following descriptions are some embodiments of the disclosure. For those skilled in the art, other drawings may be obtained based on the accompanying drawings without creative efforts.
FIG. 1 is a schematic view of an electronic device being a vehicle according to an embodiment of the disclosure.
FIG. 2 is a perspective view of a secondary battery according to an embodiment of the disclosure.
FIG. 3 is a cross-sectional view of a secondary battery according to an embodiment of the disclosure.
FIG. 4 is a cross-sectional view of an electrode assembly according to an embodiment of the disclosure.
FIG. 5 is a schematic plan view of a positive electrode in an unfolded state according to an embodiment of the disclosure.
FIG. 6 is a schematic partial cross-sectional view of an electrode assembly in a third insulation area of an insulation layer.

### DETAILED DESCRIPTION OF DISCLOSED EMBODIMENTS

In order to better understand the spirit of the embodiments of the disclosure, some preferred embodiments of the disclosure are further described below.

The embodiments of the disclosure will be described in detail below. Throughout the specification of the disclosure, the same or similar components and components with the same or similar functions are denoted by similar reference numerals. The embodiments described herein with respect to the accompanying drawings are illustrative and diagrammatic, and are intended to provide a basic understanding of the disclosure. The embodiments of the disclosure should not be construed as being limited to the disclosure.

As used herein, terms "substantially", "basically", "essentially", and "about" are used to describe and illustrate minor variations. When used in conjunction with an event or circumstance, the terms may refer to instances where the event or circumstance occurs precisely as well as instances where the event or circumstance occurs approximately.

In this specification, unless otherwise specified or limited, relative terms such as "central", "longitudinal", "lateral", "front", "rear", "right", "left", "inner", "outer", "lower", "higher", "horizontal", "vertical", "higher than", "lover than", "above", "below", "top", "bottom", and derivatives thereof (e.g., "horizontally", "downwardly", "upwardly", etc.) should be interpreted as referring to directions described in the discussion or depicted in the accompanying drawings. These relative terms are only used for convenience of description and do not require that the disclosure be constructed or operated in a specific direction.

For convenience of description, "first", "second", "third", etc. may be used herein to distinguish different components in one drawing or a series of drawings. "First", "second", "third", etc. are not intended to describe the corresponding components. In addition, the embodiments in the disclosure and features in the embodiments may be combined with each other without conflict. The disclosure will be described in detail below with reference to the accompanying drawings and in combination with the embodiments.

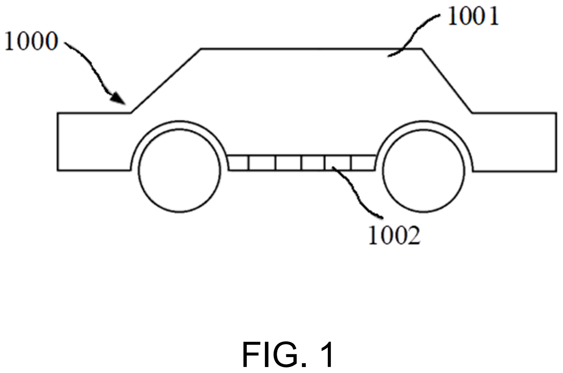

The disclosure provides an electronic device 1000. For convenience of description, the following embodiments are described by taking the electronic device 1000 as a vehicle as an example. Referring to FIG. 1, a battery pack 1002 is disposed inside the vehicle. The battery pack 1002 may be disposed at a bottom, a head, or a tail of a vehicle body 1001. The battery pack 1002 may be used to power the vehicle. For example, the battery pack 1002 may be used as an operating power source for the vehicle. A working portion of the electronic device 1000 is electrically connected to the battery pack 1002 to obtain electrical energy support. The vehicle may be a fuel vehicle, a gas vehicle, or a new energy vehicle, and the new energy vehicle may be a battery electric vehicle, a hybrid electric vehicle, or an extended range electric vehicle, but the disclosure is not limited thereto. The working portion is a vehicle body, and the battery pack 1002 is disposed at a bottom of the vehicle body and provides the electrical energy support for driving of the vehicle or operation of electric elements in the vehicle. However, in some other embodiments, the electronic device 1000 may further be a mobile phone, a portable device, a notebook computer, a ship, a spacecraft, an electric toy, an electric tool, etc. The spacecraft includes an aircraft, a rocket, a space shuttle, a spaceship, etc. The working portion is a unit component that may obtain electrical energy of the battery pack 1002 and perform corresponding work, such as a blade rotating unit of a fan and a dust-absorbing working unit of a vacuum cleaner. The electric toy includes a fixed or mobile electric toy, such as a game console, an electric car toy, an electric ship toy, and an electric aircraft toy. The electric tool includes a metal cutting electric tool, a grinding electric tool, an assembly electric tool, and a railway electric tool, such as an electric drill, an electric grinder, an electric wrench, an electric screwdriver, an electric hammer, an electric impact drill, a concrete vibrator, and an electric planer. The embodiment of the disclosure provides no special limitation to the electronic device 1000.

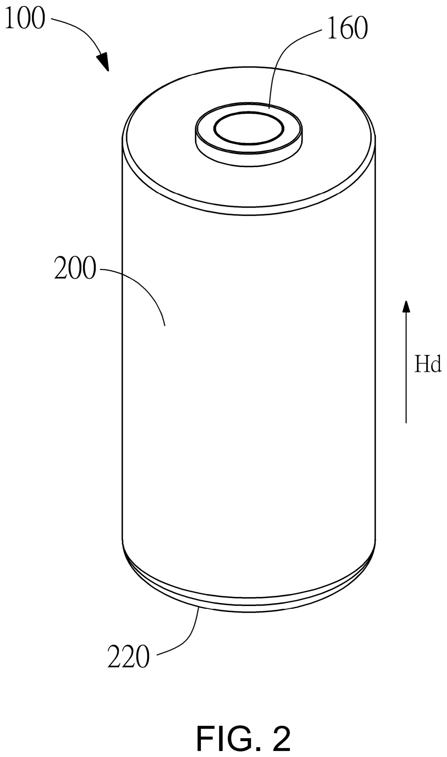

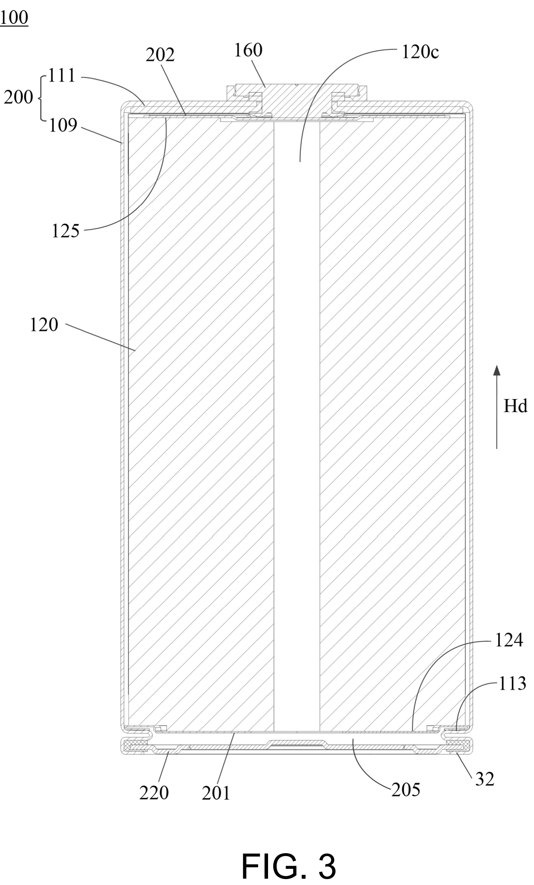

The battery pack 1002 may include multiple secondary batteries (e.g., cylindrical batteries). In the following description, the secondary battery as the cylindrical battery is taken as an example. FIG. 2 is a perspective view of a cylindrical battery 100 according to an embodiment of the disclosure. FIG. 3 is a cross-sectional view of the cylindrical battery 100 according to an embodiment of the disclosure.

As shown in FIGs. 2 to 3, the cylindrical battery 100 includes a housing 200. The housing 200 includes a peripheral side wall 109 and an end wall 111 connected to one end of the peripheral side wall 109. An opening 205 is disposed at the other end of the peripheral side wall 109 opposite to the end wall 111. A cover plate 220 covers the opening 205 of the housing 200. The cover plate 220 may be used to package an electrode assembly 120 and an electrolyte together with the housing 200. A material of the housing 200 may be any of a variety of available materials, such as copper, iron, aluminum, steel, and aluminum alloy. The housing 200 may be cylindrical and define an accommodating cavity, and the electrode assembly 120 is disposed in the accommodating cavity. An outer diameter of the housing 200 may be determined according to a specific diameter size of the electrode assembly 120. For example, the outer diameter of the housing 200 may be 18 mm, 21 mm, 46 mm, etc. In some embodiments, the cylindrical battery 100 may be a 4680 cylindrical battery (46 mm in diameter and 80 mm in height), the cylindrical battery 100 may be a 4695 cylindrical battery (46 mm in diameter and 95 mm in height), or the cylindrical battery 100 may be a 46120 cylindrical battery (46 mm in diameter and 120 mm in height).

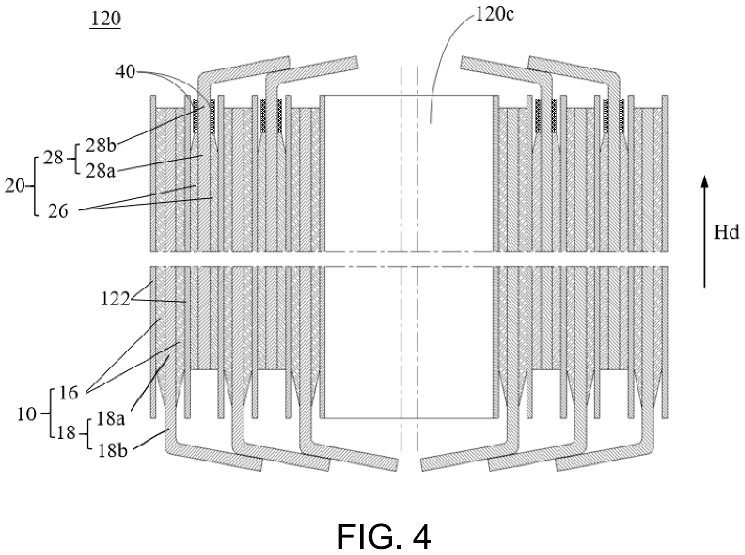

The electrode assembly 120 may be mainly formed by stacking and winding a positive electrode, a negative electrode, and a separator located between the positive electrode and the negative electrode in sequence (described in detail below with reference to FIG. 4). The wound electrode assembly 120 may have a winding center hole 120c. In some embodiments, the positive electrode may include a positive current collector and a positive active material layer, and the positive active material layer is coated on a portion of a surface of the positive current collector. An uncoated area of the positive current collector not covered by a positive coated area is used to form a positive tab 125. The negative electrode may include a negative current collector and a negative active material layer, and the negative active material layer is coated on a portion of a surface of the negative current collector. An uncoated area of the negative current collector not covered by a negative coated area is used to form a negative tab 124.

An inwardly protruding crimping portion 113 (also referred to as a rolling groove) is formed on the peripheral side wall of the housing 200 adjacent to the opening 205. The electrode assembly 120 is disposed between the end wall 111 and the crimping portion 113, and the crimping portion 113 may restrict movement of the electrode assembly 120 in a height direction Hd between the end wall 111 and the crimping portion 113 and an opposite direction thereof. An end portion of the peripheral side wall 109 of the housing 200 on a side of the opening 205 may be configured as a beading portion 32, and the beading portion 32 extends inwardly along a radial direction of the housing 200. The beading portion 32 and the crimping portion 113 are arranged at intervals along the height direction Hd, and the crimping portion 113 and the beading portion 32 may jointly clamp the cover plate 220. The cover plate 220 is electrically insulated from the housing 200.

The negative tab 124 of the electrode assembly 120 faces the opening 205, and may be electrically connected to the housing 200 through a negative current collecting plate 201 located between the cover plate 220 and the electrode assembly 120, so that the housing 200 is negatively charged. The negative current collecting plate 201 may be welded to the housing 200 by laser welding. Specifically, a welding position between the negative current collecting plate 201 and the housing 200 is located on a side of the crimping portion 113 facing the electrode assembly 120.

The cylindrical battery 100 may further include an electrode post 160, and the electrode post 160 passes through the end wall 111 and is insulated from the end wall 111. The electrode post 160 may be electrically connected to the positive tab 125 of the electrode assembly 120 through a positive current collecting plate 202 located between the electrode post 160 and the electrode assembly 120, so that the electrode post 160 is positively charged. In some embodiments, the electrode post 160 may be welded to the positive current collecting plate 202 by laser transmission welding.

In an example of the cylindrical battery 100 in the disclosure, a manufacturing method of the cylindrical battery 100 in the disclosure includes the following steps:

Winding: The negative electrode, the separator, and the positive electrode are stacked and wound to form a winding structure. Uncoated portions of the negative current collector of the negative electrode and the positive current collector of the positive electrode are used as the positive tab 125 and the negative tab 124, and the positive tab 125 and the negative tab 124 are bent along a radial direction of the electrode assembly 120.

Welding the current collecting plates to the electrode assembly: The positive current collecting plate 202 and the negative current collecting plate 201 are welded and connected to surface areas of the bent positive tab 125 and negative tab 124 respectively.

Inserting into the housing: The electrode assembly 120 welded to the negative current collecting plate 201 and the positive current collecting plate 202 is installed into the housing 200 from the opening 205. A method of installing the electrode assembly 120 in this step is not limited, which may, for example, be installed manually or by a robot arm.

The electrode post 160 is installed.

Injecting the electrolyte: A method of injecting the electrolyte is not limited. The electrolyte may be injected from the opening 205. In this embodiment, the electrolyte is injected from the opening 205, which reduces a process of disposing an injection hole on the end wall 111. The existing opening 205 may be directly used for injection, which simplifies the process and reduces the cost.

Sealing: The cover plate 220 is sealed and installed on the opening 205. There are many packaging methods, which are not limited thereto. In some embodiments, an outer periphery of the housing 200 is first rolled to form the crimping portion 113 that is recessed toward a center of the housing 200 to restrict the movement of the electrode assembly 120 in the height direction Hd, and then pier sealing is performed on the cover plate 220 by using a mechanical sealing process to form the beading portion 32, so that the cover plate 220 is sealed and installed on the opening 205 of the housing 200. In this step, the process is mature, the cost is low, and the efficiency is high.

FIG. 4 is a cross-sectional view of the electrode assembly 120 according to some embodiments. Referring to FIG.4, the electrode assembly 120 is mainly formed by winding a negative electrode 10 and a positive electrode 20, and a separator 122 is disposed between the negative electrode 10 and the positive electrode 20. The electrolyte may be filled between the negative electrode 10, the positive electrode 20, and the separator 122.

The negative electrode 10 may include a negative current collector 18 and a negative active material layer 16. Portions of opposite surfaces of the negative current collector 18 along a thickness direction thereof are covered by the negative active material layer 16. The negative current collector 18 includes a coated area 18a covered by the negative active material layer 16 and an uncoated area 18b not covered by the negative active material layer 16. The positive electrode 20 includes a positive current collector 28 and a positive active material layer 26. At least portions of opposite surfaces of the positive current collector 28 along a thickness direction thereof are covered by the positive active material layer 26. The positive current collector 28 includes a positive coated area 28a covered by the positive active material layer 26 and a positive uncoated area 28b not covered by the positive active material layer 26.

The negative uncoated areas 18b of the negative current collector 18 and the positive uncoated area 28b of the positive current collector 28 are respectively located at opposite ends of the electrode assembly 120 in the height direction Hd. The negative uncoated areas 18b of the negative current collector 18 may be used to form the negative tab 124. The positive uncoated area 28b of the positive current collector 28 may be used to form the positive tab 125. The negative uncoated area 18b of the negative current collector 18 may be bent toward the winding center hole 120c of the electrode assembly 120. The bent negative uncoated areas 18b may be stacked on each other. The negative uncoated areas 18b stacked on each other may be welded to the negative current collecting plate 201 and further electrically connected to the housing 200 (see FIG. 3).

Taking a lithium-ion battery as an example, a material of the negative current collector 18 may be copper, for example, and the negative current collector 18 is copper foil. A negative active material of the negative active material layer 16 may be carbon, silicon, etc. A material of the positive current collector 28 may be, for example, aluminum, and a positive active material of the positive active material layer 26 may be lithium cobalt oxide, lithium iron phosphate, ternary lithium, lithium manganate, etc. A material of the separator 122 may be PP (polypropylene) or PE (polyethylene).

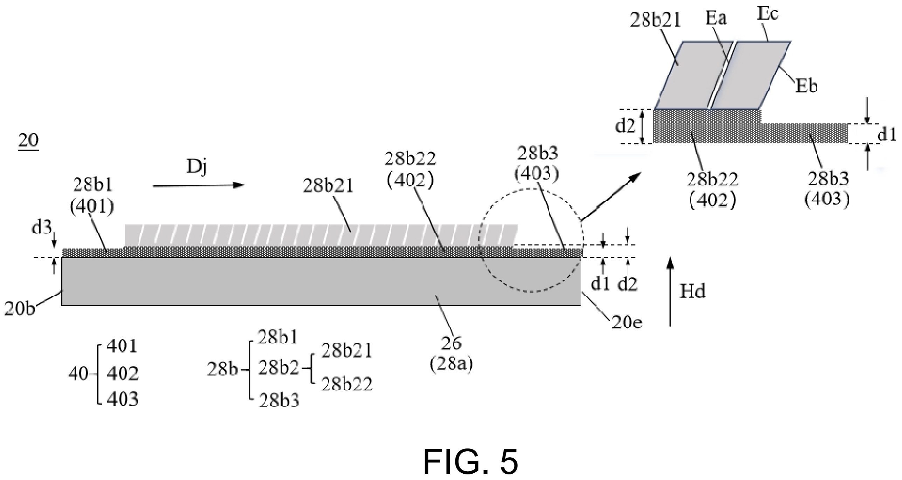

FIG. 5 is a schematic plan view of a positive electrode in an unfolded state according to an embodiment of the disclosure. As shown in FIGs. 4 and 5, the positive electrode 20 is wound along a winding direction Dj thereof from a winding start end 20b to a winding terminal end 20e. Along the winding direction Dj, the positive uncoated area 28b includes a first positive uncoated area 28b1, a second positive uncoated area 28b2, and a third positive uncoated area 28b3 in sequence. Along the opposite direction of the height direction Hd, the second positive uncoated area 28b2 includes a positive tab 28b21 and a positive connection area 28b22 connected between the positive tab 28b2 and the positive coated area 28a. The first positive uncoated area 28b1 and the third positive uncoated area 28b3 do not include the positive tab 28b21.

In some embodiments, the positive tab 28b21 is formed by cutting a corresponding portion of the positive uncoated area 28b. The positive tab 28b21 may be bent toward the winding center hole 120c, and the bent positive tabs 28b21 may be stacked on each other. The positive tabs 28b21 stacked on each other may be further electrically connected to the electrode post 160 through the positive current collecting plate 202 (see FIG. 3).

In order to minimize the possibility of contact between the negative electrode 10 and the positive electrode 20, the electrode assembly 120 may further include an insulation layer 40. The insulation layer 40 may be disposed on two side surfaces of the positive uncoated area 28b of the positive current collector 28. The insulation layer 40 may effectively prevent electrical contact between the negative electrode 10 and the positive electrode 20.

In some embodiments, the insulation layer 40 is mainly composed of boehmite and PVDF (polyvinylidene difluoride). Boehmite accounts for 80%, and PVDF accounts for 20%. In some embodiments, the insulation layer is a ceramic material layer. A thickness of the insulation layer 40 is 1.5 mm to 2.5 mm, which may be, for example, 1.5 mm, 1.7 mm, 2 mm, 2.1 mm, 2.3 mm, or 2.5 mm. By setting a thickness range of the insulation layer 40, it is avoided that a coating thickness of the insulation layer 40 is too thin, which makes it difficult to obtain required electrical insulation and supporting strength. At the same time, it is avoided that the thickness of the insulation layer 40 is too thick, resulting in the possibility of a longer curing time of a coating layer and an increase in a thickness of an overall structure.

In some embodiments, the insulation layer 40 includes a color developer to distinguish one side coated with the insulation layer 40 as a front side or a back side of the positive electrode 20 through a color rendering effect of the color developer, including but not limited to distinguishing a surface density of the front and back sides of the positive electrode 20, etc. A main component of the color developer may be bismuth vanadate, which is yellow in color.

The insulation layer 40 includes a first insulation area 401 covering the first positive uncoated area 28b1, a second insulation area 402 covering the positive connection area 28b22, and a third insulation area 403 covering the third positive uncoated area 28b3. In some embodiments, the third insulation area 403 has a first width d1 in the height direction Hd, and the second insulation area 402 has a second width d2 in the height direction Hd. In some embodiments, the first width d1 of the third insulation area 403 is less than the second width d2 of the second insulation area 402.

The positive tabs 28b21 are all connected to the positive connection area 28b22. Since burrs may be generated when the tabs are cut, safety may be ensured by disposing the first positive uncoated area 28b1 and the third positive uncoated area 28b3 without the tabs on two sides of the second positive uncoated area 28b2 in the winding direction Dj. In the embodiment of the disclosure, the first width d1 is further configured to be less than the second width d2. That is, the insulation layer 40 with the greater second width d2 is disposed on the second positive uncoated area 28b2 protruding with a tab, which may provide support for the second positive uncoated area 28b2 protruding with the tab when the tab is bent, prevent a risk of the tab being inserted inwardly, and eliminate the burrs at bending corners, further improving the safety.

In some embodiments, the second width d2 of the second insulation area 402 ranges from 1.3 mm to 2.7 mm. If the second width d2 is greater than 2.7 mm, the second width d2 will be too wide, resulting in a small effective welding area of the tab. If the second width d2 is less than 1.3 mm, the second width d2 is too small, resulting in insufficient support and poor safety.

The first insulation area 401 has a third width d3 in the height direction. In some embodiments, the third width d3 of the first insulation area 401 is less than the second width d2. The insulation layer 40 with the greater second width d2 is disposed on the second positive uncoated area 28b2 protruding with the tab, which may provide the support when the tab is bent, prevent the risk of the tab being inserted inwardly, and eliminate the burrs at the bending corners, improving the safety.

In some embodiments, the first width d1 ranges from 1.3 mm to 3.2 mm. Such a size range may ensure that the second width d2 is greater than the first width d1 without occupying too much internal space of the battery.

In some embodiments, the first width d1 of the third insulation area 403 is consistent with the third width d3 of the first insulation area 401 (considering variations in a manufacturing process). The first width d1 is consistent with the third width d3, and the first insulation area 401 and the third insulation area 403 may be formed by cutting at the same time, which is more convenient for processing.

The positive tab 28b21 may include a first edge Ea and a second edge Eb opposite to each other in the winding direction Dj, and a third edge Ec connected to end portions of the first edge Ea and the second edge Eb away from the positive connection area 28b22. The first edge Ea and the second edge Eb may be substantially parallel to each other. The first edge Ea and the second edge Eb extend from the positive connection area 28b22 away from the positive connection area 28b22 and are inclined toward the winding terminal end 20e. The second edge Eb is closer to the winding terminal end 20e than the first edge Ea, so an included angle between the second edge Eb and the third edge Ec is an acute angle. During a process of winding the positive electrode 20, since the first edge Ea and the second edge Eb of the positive tab 28b21 are inclined toward the winding terminal end 20e, which is convenient to bend and smooth the positive tab 28b21 toward the winding center hole 120c when winding the positive electrode 20, which may effectively reduce the force required to be applied when bending the positive tab 28b21, thereby avoiding deformation of the electrode, reducing material shedding of the positive active material layer 26 of the positive electrode 20, and improving a yield rate.

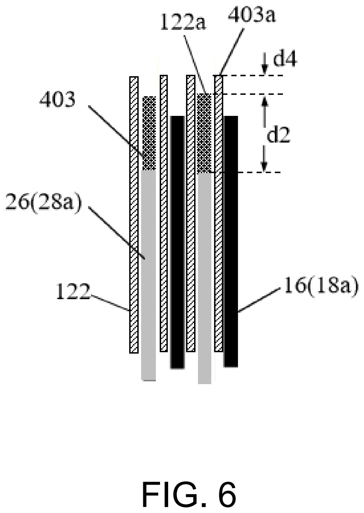

FIG. 6 is a schematic partial cross-sectional view of an electrode assembly in the third insulation area 403 of the insulation layer 40. Referring to FIG. 6, the separator 122 has a first end 122a in the height direction Hd, and the third insulation area 403 of the insulation layer 40 has a first end 403a in the height direction. The first end 403a of the third insulation area 403 extends beyond the first end 122a of the separator 122 in the height direction Hd. Specifically, the first end 403a of the third insulation area 403 extends beyond the first end 122a of the separator 122 in the height direction Hd by a distance d4. In some embodiments, the distance d4 ranges from 0.5 mm to 2 mm. The separator 122 extends beyond the insulation layer 40 in the height direction Hd, which may prevent the positive pole from being misaligned under vibration conditions and improve the safety of the battery.

The above describes the embodiments of the disclosure by disposing the insulation layer on the positive electrode. However, in other embodiments, the various embodiments of the insulation layer in the disclosure may also be applied to the negative electrode.

## Claims

1. A secondary battery (100), comprising:
an electrode assembly (120), wherein the electrode assembly (120) comprises a first electrode (20), a second electrode (10), and a separator (122) disposed between the first electrode (20) and the second electrode (10),
the first electrode (20) comprises a first current collector (28) and a first active material layer (26), and along a height direction (Hd) of the electrode assembly (120), the first current collector (28) comprises a coated area (28a) covered by the first active material layer (26) and an uncoated area (28b) not covered by the first active material layer (26),
along a winding direction (Dj) of the first electrode (20), the uncoated area (28b) comprises a first uncoated area (28b1), a second uncoated area (28b2), and a third uncoated area (28b3) in sequence, and along an opposite direction of the height direction (Hd), the second uncoated area (28b2) comprises a first tab (28b21) and a connection area (28b22) connected between the first tab (28b21) and the coated area (28a), and the first uncoated area (28b1) and the third uncoated area (28b3) do not comprise the first tab (28b21); and
an insulation layer (40) comprising a first insulation area (401) covering the first uncoated area (28b1), a second insulation area (402) covering the connection area (28b22), and a third insulation area (403) covering the third uncoated area (28b3),
wherein a first width (d1) of the third insulation area (403) in the height direction (Hd) is less than a second width (d2) of the second insulation area (402) in the height direction (Hd).

2. The secondary battery (100) according to claim 1, wherein
the second width (d2) ranges from 1.3 mm to 2.7 mm.

3. The secondary battery (100) according to claim 1, wherein
the first insulation area (401) has a third width (d3) in the height direction (Hd), and the third width (d3) is less than the second width (d2).

4. The secondary battery (100) according to claim 3, wherein
the first width (d1) ranges from 1.3 mm to 3.2 mm, and the first width (d1) is consistent with the third width (d3).

5. The secondary battery (100) according to claim 3, wherein
the separator (122) has a first end (122a) in the height direction (Hd), the third insulation area (403) has a first end (403a) in the height direction (Hd), and the first end (122a) of the separator (122) extends beyond the first end (403a) of the third insulation area (403) in the height direction (Hd) by a distance (d4) in a range of 0.5 mm to 2 mm.

6. The secondary battery (100) according to claim 1, wherein
the first tab (28b21) comprises a first edge (Ea) and a second edge (Eb) opposite to each other in the winding direction (Dj), the first edge (Ea) and the second edge (Eb) are connected to the connection area (28b22), and the first electrode (20) extends from a winding start end (20b) to a winding terminal end (20e) in the winding direction (Dj), wherein the first edge (Ea) and the second edge (Eb) are inclined toward the winding terminal end (20e).

7. The secondary battery (100) according to claim 1, wherein
the first electrode (20) is a positive electrode, and the secondary battery (100) is a cylindrical battery.

8. The secondary battery (100) according to claim 1, further comprising:
a housing (200) configured to accommodate the electrode assembly (120), wherein the housing (200) comprises a peripheral side wall (109) and an end wall (111) connected to one end of the peripheral side wall (109), and the other end of the peripheral side wall (109 )has an opening (205), wherein the first tab (28b21) faces the end wall (111);
an electrode post (160) passing through the end wall (111) and electrically insulated from the end wall (111);
a first current collecting plate (202) connected between the first tab (28b21) and the electrode post (160),
wherein the secondary battery (100) is a cylindrical battery.

9. A battery pack (1002), comprising the secondary battery (100) according to any one of claims 1-8.

10. An electronic device (1000), comprising the battery pack (1002) according to claim 9.
